# EUROPEAN PATENT APPLICATION

(11) **EP 4 105 058 A1**
(43) Date of publication of application: **21.12.2022**
(21) Application number: 20873600.9
(22) Date of filing: 09.10.2020
(51) Int. Cl.: B60L 13/10, H01F 7/06, B61B 13/08

(54) **ELECTROMAGNETIC LEVITATION TRAIN TRACK SYSTEM AND LEVITATION ELECTROMAGNET**

(30) Priority: 09.10.2019 CN 201910955630
(71) Applicant: Dalian Whim Science & Technology Limited Company, Dalian, Liaoning 116038 (CN)
(72) Inventor: LIU, Zhongchen, Dalian, Liaoning 116038 (CN)
(74) Representative: Isern Patentes y Marcas S.L.
(86) International application number: PCT/CN2020/120012
(87) International publication number: WO 2021/068894

(57) **Abstract**

The present disclosure provides an electromagnetic levitation train-track system. Tracks are arranged on two sides of a roadbed or track beams, and a magnetic levitation train runs on the tracks. The system is characterized in that a traction guide electromagnet is horizontally arranged on supporting arms on two sides of the magnetic levitation train, a linear motor stator is horizontally arranged at a relative position on the track, the linear motor stator and the traction guide electromagnet are horizontally arranged in the magnetic pole directions, a core linear motor is formed by the linear motor stator and the traction guide electromagnet at a certain magnetic gap, and an E-shaped cross section levitation electromagnet and a gap sensor are arranged at the bottom of the magnetic levitation train and levitated below an armature plate horizontally arranged at the bottom of the track. The current magnitudes and directions of coils of the traction guide electromagnet and the linear motor stator are controlled through a control system, and the magnitudes and directions of the horizontal guide force and levitation force and the traction force are controlled, so that the magnetic levitation train flies in the air.

## Description

### TECHNICAL FIELD

The present disclosure belongs to the field of track traffic, and particularly relates to an electromagnetic levitation train-track system which is suitable for a high-speed flying magnetic levitation train-track system and a vacuum pipeline magnetic levitation train.

### BACKGROUND ART

Typical electromagnetic levitation trains currently put into commercial operation comprise EMS systems in Germany, Japanese superconducting electric levitation trains, and medium-low speed magnetic levitation trains in Japan, China and South Korea. There are main problems existing in the prior art as follows. The electromagnetic levitation system of the EMS magnetic levitation train system serves as a levitation electromagnet and a traction motor of a linear motor, the efficiency is not high, the bearing capacity is weak, the weight is large, and the traction control structure of the synchronous linear motor of the traveling wave magnetic field is complex. The superconducting electric levitation train has obvious electromagnetic radiation in the levitation process by adopting a low-temperature superconducting system and needs to be supported by rubber wheels at a low speed, so that the energy consumption is high, and the superconducting system is more complex in structure and high in cost. The medium-low speed magnetic levitation train is simple in structure, but the driving efficiency of a copper plate or an aluminum plate laid on the top surface of the track and an asynchronous motor at the bottom of the train is very low, the leakage magnetic field of an F track panel is high, and the levitation energy consumption is large. The wheel-track train is simple in structure and long in application time, but an open wheel-track structure has potential safety hazards of derailment at any time under high speed. In addition, wheel bearings are seriously abraded under high speed and heavy load, the service life is short, frequent replacement and maintenance are needed, the operation cost is high, and the adhesion coefficient between wheels and tracks is gradually reduced along with the increase of the train speed. Therefore, high-speed braking is difficult.

### SUMMARY

The present disclosure aims to creatively provide a novel combined structure of an electromagnetic levitation train and a track according to existing mature application technologies, and the electromagnetic levitation train and the track have the advantages of being safe, rapid, economical, energy-saving and high in cost performance. The novel combined structure has the advantages of the technologies, can overcome the defects of the technologies, and is an economical and efficient technical solution of high-speed electromagnetic levitation train tracks.

In the technical solution adopted for solving the technical problems in the present disclosure, according to an electromagnetic levitation train-track system, tracks are arranged on two sides of a roadbed or track beams, and a magnetic levitation train runs on the tracks, wherein traction guide electromagnets are horizontally arranged on supporting arms on two sides of the magnetic levitation train, the traction guide electromagnet is horizontally arranged in the magnetic pole direction, a linear motor stator is horizontally arranged at the position, corresponding to the traction guide electromagnet, on the track, the linear motor stator is composed of a stator coil and a stator core, the stator core is horizontally arranged in the magnetic pole direction, the working face of the traction guide electromagnet and the working face of the stator core are horizontally arranged and form a core linear motor at a certain magnetic gap, a levitation electromagnet is arranged at the bottom of the magnetic levitation train, and an armature plate is horizontally arranged above the levitation electromagnet at the bottom of the track at a certain magnetic gap.

Further, a rotor coil of the traction guide electromagnet is connected with a control system, the current magnitudes and directions of the coils of the linear motor stator and the traction guide electromagnet are controlled through the control system, and the horizontal guide force and the traction force are controlled; and a levitation coil in the levitation electromagnet is connected with the control system to form an electromagnetic levitation system, the current magnitude of the levitation coil of the levitation electromagnet is controlled through the control system, and the levitation force is controlled.

Further, the levitation electromagnet is an E-shaped levitation electromagnet, the E-shaped levitation electromagnet comprises an E-shaped core and a levitation coil, the cross section of the E-shaped core is E-shaped, side core plates are arranged on two sides of the E-shaped core, a middle core plate is arranged in the middle of the E-shaped core, a bottom core plate for connecting the side core plates and the middle core plate into an E-shaped cross section is arranged at the bottom of the E-shaped core, the E-shaped cross section extends along a straight line or a curve to form the E-shaped core, and the levitation coil is arranged in a groove enclosed among the side core plates, the middle core plate and the bottom core plate.

Further, the levitation electromagnet is an E-shaped levitation electromagnet, the E-shaped levitation electromagnet comprises an E-shaped core and a levitation coil, the cross section of the E-shaped core is E-shaped, side core plates are arranged on two sides of the E-shaped core, a middle core plate is arranged in the middle of the E-shaped core, a bottom core plate for connecting the side core plates and the middle core plate into an E-shaped cross section is arranged at the bottom of the E-shaped core, the E-shaped cross section extends along a straight line or a curve to form the E-shaped core, sunken wire accommodating grooves are formed in two ends of the middle core plate, the levitation coil is arranged in a groove enclosed among the side core plates, the middle core plate and the bottom core plate, and coils at two ends of the levitation coil are bent downwards to be embedded into the wire accommodating grooves.

Further, the armature plate horizontally arranged on the track and T-shaped steel located on the armature plate form an I-shaped steel track, a bottom plate of the I-shaped steel track and the E-shaped levitation electromagnet form an electromagnetic levitation system, and levitation is controlled through the control system.

Further, the armature plate horizontally arranged on the track and I-shaped steel form an L-shaped steel track, a bottom plate of the L-shaped steel track and the E-shaped levitation electromagnet form an electromagnetic levitation system, and levitation is controlled through the control system.

Further, the linear motor stator is the primary component of a linear motor composed of a plurality of S-shaped bent snakelike or rounded square wave rectangular stator coils and a stator core.

Further, the linear motor stator is the primary component of a linear motor composed of a plurality of rectangular stator coils and a stator core.

Further, the traction guide electromagnets are arranged on two sides of the track to serve as the primary components of a linear motor, and the linear motor stators composed of a stator coil and a stator core are arranged on supporting arms on two sides of the magnetic levitation train to serve as the secondary components of the linear motor.

Further, the traction guide electromagnets are arranged on two sides of the magnetic levitation train to serve as the primary components of a linear motor, and the magnetic conductive cores or core coils composed of magnetic conductive cores and electromagnetic coils are arranged on two sides of the track to serve as the secondary components of the linear motor.

Further, the levitation coil is formed by bending two ends of a rectangular single-strand or multi-strand coil downwards, namely, two parallel straight line sections are arranged in the middle of the levitation coil, downward bent arc sections at two ends of the straight line sections are connected with U-shaped sections at two ends to form the complete levitation coil, the levitation coil is formed by winding at least one continuous wire, and at least two end wires extend out of the levitation coil.

Further, the whole middle core plate or two ends of the middle core plate is/are split into detachable long-strip-shaped, L-shaped, T-shaped or M-shaped connecting core blocks.

Further, the E-shaped armature plate is combined with a steel structural member, and the steel structural member is at least one of T-shaped steel, I-shaped steel, H-shaped steel, L-shaped steel, C-shaped steel, square steel, flat steel and channel steel to form an E-shaped bottom levitation steel track.

A levitation electromagnet comprises a levitation coil and a magnetic conductive core, and the levitation coil is assembled in a groove of the magnetic conductive core for accommodating the levitation coil, wherein two end parts of the levitation coil are inclined downwards relative to a coil body, and the end parts inclined downwards are arranged in sunken wire accommodating grooves formed in two ends of the magnetic conductive core to form an avoidance space at the end parts of the levitation coil, and the middle core plate of the magnetic conductive core can pass through the end parts of the levitation coil through the avoidance space.

Further, the levitation coil is mainly composed of waist portions located on two sides and a sinking portion connected with the two waist portions, the sinking portion is inclined downwards relative to the waist portions in the horizontal direction, and the sinking portion comprises a connecting section obliquely connected with the waist portions and a sinking section; the magnetic conductive core comprises a bottom core plate, side core plates and a middle core plate, the side core plates on two sides are located on two transverse sides of the bottom core plate and connected through the bottom core plate, the middle core plate is paved on the upper surface of the bottom core plate, the middle core plate is narrower than the bottom core plate in the transverse direction, two side grooves are formed between the middle core plate and the side core plates to serve as grooves for accommodating the two waist portions of the levitation coil, two longitudinal end parts of the bottom core plate are slotted in a straight step shape or an inclined step shape to form the wire accommodating grooves for accommodating the sinking portion of the levitation coil.

Further, the angle at which the sinking portion horizontally inclined downwards relative to the waist portions is 15-90 degrees.

Further, the angle at which the sinking portion horizontally inclined downwards relative to the waist portions is 90 degrees.

Further, the middle core plate in the longitudinal direction is shorter than the length of the bottom core plate of the upper step, the levitation coil is assembled in a groove used for accommodating the levitation coil, then an end core block is assembled on the bottom core plate of the upper step, and the end core block passes through the avoidance space of the levitation coil above the wire accommodating grooves.

Further, the levitation coil is formed by bending two ends of a rectangular or rounded rectangular single-strand or multi-strand coil downwards, the levitation coil is formed by winding at least one continuous wire, and at least two end wires extend out of the levitation coil.

Further, the middle core plate of the magnetic conductive core passes through the position above the sinking section of the sinking portion of the levitation coil through the avoidance space, and the sinking section makes vertical contact with the middle core plate or a gap exists between the sinking section and the middle core plate in the vertical direction.

A levitation electromagnet comprises a levitation coil and a magnetic conductive core, and the levitation coil is assembled in a groove of the magnetic conductive core for accommodating the levitation coil, wherein the end part of the magnetic conductive core is smoothly inclined downwards, the middle core plate of the magnetic conductive core is inclined along with the end part of the magnetic conductive core, and a groove used for assembling the end part of the levitation coil on the magnetic conductive core forms an inclined groove along with the inclination of the end part of the magnetic conductive core.

A levitation electromagnet system is formed by sequentially connecting a plurality of levitation electromagnets, and the middle core plates and the side core plates of every two adjacent levitation electromagnets are connected through connecting plates by the adjacent levitation electromagnets.

A levitation electromagnet system is formed by sequentially connecting a plurality of levitation electromagnets, and the middle core plates of two levitation electromagnets are connected through connecting core blocks by the adjacent levitation electromagnets.

A magnetic levitation track is characterized in that a linear motor stator is horizontally installed on the track, the linear motor stator is composed of a stator coil and a stator core, the stator core is horizontally arranged in the magnetic pole direction, the stator core is provided with a vertical groove for installing the stator coil, the magnetic pole working face of the stator core is vertically arranged, and armature plates are horizontally arranged on two sides of the track at certain magnetic gaps above the levitation electromagnet.

Further, the stator coils are a plurality of S-shaped bent snakelike coils or rounded square wave rectangular coils or rectangular coils.

The linear motor stator is composed of a plurality of rectangular stator coils and a stator core, the rectangular stator coils and the stator cores are paved in parallel along two sides of the track, and the rectangular stator coils are arranged outside the rectangular stator core.

According to an electromagnetic levitation system of an electromagnetic levitation track, an armature plate is horizontally arranged on the track, the armature plate and a steel structural member form a steel track, a bottom plate of the steel track and the levitation electromagnet according to any one of above claims form the electromagnetic levitation system, and levitation is controlled through a control system.

Further, the steel structural member is at least one of T-shaped steel, I-shaped steel, H-shaped steel, L-shaped steel, C-shaped steel, square steel, flat steel and channel steel.

The present disclosure has the following beneficial effects.

The structure is simplified, and the reliability is high. According to the Germany electromagnetic levitation train, an electromagnet (an electromagnet formed by matching linear motor stators 13 and traction guide electromagnets 22) arranged at the bottom is used as a levitation electromagnet and a traction electromagnet, a pole changing structure for tracking a magnetic pole wave crest of a traveling wave magnetic field is considered structurally, and the levitation electromagnet is large in size and complex in structure. The reliability requirement of the control system is extremely high, otherwise, the derailing risk is caused by instability when a slight accident occurs under an alternating magnetic field. The electromagnet at the bottom of the train is only used as a levitation electromagnet and is simple in structure. Electromagnets (electromagnets formed by matching linear motor stators 13 and traction guide electromagnets 22) on two sides of the train can be used as guide electromagnets and also can be used as rotor magnetic poles of a traction motor, namely, traction electromagnets on the train are reduced or the number of at least one set of key structural components in the traction electromagnets is reduced, so that the cost is reduced, and the weight is reduced. Furthermore, the rectangular coil is adopted, so that the control current can be reduced, and the withstand voltage level of the withstand voltage component is reduced. During emergency braking, the electromagnet can also form eddy current through NSNS...NSNS magnetic poles in an alternating mode, and an eddy current braking mode is adopted for braking. The electromagnets on two sides of the train and the traction coils on the two sides of the track form a magnetic levitation linear motor, the working principle of a brushless direct current motor which is most easily controlled at present can be adopted, high-speed traction control of the train can be easily achieved, and the linear motor stator only bears traction force but does not need to bear the self weight of the train. Therefore, various traction control technologies except a current synchronous linear motor control system can be adopted, the wire diameter of a stator coil is correspondingly reduced, the linear motor is easier to control and manufacture compared with a Germany three-phase alternating-current variable-frequency synchronous linear motor, traction control can be controlled at will, even if traction control faults occur, the risk of derailing does not occur, and the reliability is higher.

The levitation stability is high. The bottom plane of the linear motor of the Germany EMS system is of an uneven core structure, so that the levitation area can be changed at any time, the magnetic field can be continuously changed, traction control of the linear motor is doped, the levitation control difficulty is very large, and the requirement for the reliability of the levitation control system is very high, so that the system is not easy to keep stable even on a flat road surface, and is more complex under a curve. The bottom of the levitation armature plate is a plane, the levitation area of the levitation armature plate on a straight road and a curved road surface cannot be changed, the levitation is more stable, the levitation force is easy to stably control, and therefore the riding comfort is better.

The levitation capacity is high. The area of the levitation armature at the bottom of the levitation track with the same width is increased by at least one time compared with the levitation area of the F-shaped track panel, and the top area of the E-shaped cross section levitation electromagnet at the bottom of the levitation armature is also increased by one time. The levitation capacity of the track per unit length is about two times that of the F-shaped track panel, and the levitation capacity of the Germany EMS electromagnetic levitation track is slightly higher than but almost equivalent to that of the F-shaped track panel, so that the levitation capacity of the track adopting the E-shaped cross section levitation electromagnet is basically about twice that of the Germany EMS electromagnetic levitation track, and the defect of low levitation capacity of the conventional electromagnetic levitation train is overcome.

The electromagnetic resistance is low. The magnetic field intensity difference between the joint and the middle section of the E-shaped cross section levitation electromagnet is small, so that the magnetic field intensity difference is obviously different from the obvious eddy current resistance generated at the two ends of the existing concentric-square-shaped electromagnet, the magnetic fields at all positions of the improved E-shaped cross section levitation electromagnets are almost consistent in the longitudinal direction, and the electromagnetic resistance can be reduced in the driving process.

The electromagnetic radiation is low. The levitation coil of the E-shaped cross section levitation electromagnet is surrounded by the core, so that the leakage magnetic field is extremely small, and the electromagnetic radiation is extremely low.

Energy and power are saved, and the levitation energy consumption is low. The internal magnetic field and the external magnetic field of the levitation coil adopting the E-shaped cross section levitation electromagnet can be almost completely utilized, the levitation energy consumption is obviously reduced compared with that of the existing medium-low-speed and EMS high-speed electromagnetic levitation train, the levitation energy consumption is reduced, and therefore more energy is saved. The E-shaped cross section levitation electromagnet is adopted at the bottom of the train, so that the maximum efficiency of the electromagnet can be achieved, the load levitation energy consumption is lower, and almost half of levitation electric energy is saved.

The economical efficiency is high. Only the E-shaped cross section levitation electromagnets on two sides of the bottom of the train and the electromagnets on two sides of the train can achieve the three functions of levitation, guiding and traction, key structural parts are few, and the train cost is reduced. In the Germany electromagnetic levitation train, the electromagnet at the bottom is used as a levitation electromagnet and needs to bear the traction electromagnet, and the levitation electromagnet is large in size and complex in structure. The levitation electromagnet at the bottom of the train only needs to have a levitation function, and the levitation magnet is small in size and light in weight. The electromagnets arranged on two sides of the train are used as traction guide electromagnets, the weight of the whole train does not need to be borne, the size can be greatly reduced, after the control mode of the linear brushless motor is adopted, the control system is simpler, the cost of the control system is reduced, and therefore the overall manufacturing cost can be obviously reduced.

The train is suitable for high and low speed flight. The train and the track are kept in magnetic levitation non-contact operation at a static state and at a high speed, the linear motor is controlled by a brushless direct current motor to achieve efficient traction operation at a low speed and can also achieve efficient traction operation at a high speed, and in a vacuum pipeline, the magnetic levitation train can achieve ground-attached high-speed flight with the speed of 1000 kilometers per hour or above.

The maintenance cost is low. The track is free of contact, mechanical friction resistance and noise are eliminated, the track is hardly abraded, and the maintenance cost of the track is reduced.

### BRIEF DESCRIPTION OF THE DRAWINGS

The description of the present disclosure is further described in conjunction with the attached figures and embodiments.
FIG 1 is a structural schematic diagram of an electromagnetic levitation train and a track pulled by an I-shaped steel track snakelike coil in the present disclosure.
FIG 2 is a partial enlarged drawing of FIG 1.
FIG. 3 is a structural schematic diagram of an electromagnetic levitation train and a track pulled by a steel I-beam rectangular coil in the present disclosure.
FIG. 4 is a partial enlarged drawing of FIG. 3.
FIG. 5 is a structural schematic diagram of an electromagnetic levitation train and a track with L-shaped steel tracks in the present disclosure.
FIG. 6 is a partial enlarged drawing of FIG. 5.
FIG. 7 is a stereo structural schematic diagram of a plurality of E-shaped cross section levitation electromagnet groups in the present disclosure.
FIG. 8 is a profile structural schematic diagram of a levitation electromagnet with an E-shaped cross section.
FIG. 9 is a stereo structural schematic diagram of a levitation coil.
FIG. 10 is a stereoscopic structural schematic diagram of an E-shaped core in the present disclosure.
FIG. 11 is a stereoscopic structural schematic diagram of a long-strip-shaped end core block in the present disclosure.
FIG. 12 is a stereoscopic structural schematic diagram of an L-shaped end core block in the present disclosure.
FIG. 13 is a stereoscopic structural schematic diagram of a T-shaped connecting core block in the present disclosure.
FIG. 14 is a cross section structural schematic diagram of a levitation electromagnet with an E-shaped cross section.
FIG. 15 is a side view of a V-shaped levitation coil in the present disclosure.
FIG. 16 is a stereoscopic structural schematic diagram of a V-shaped levitation coil in the present disclosure.
FIG. 17 is a stereoscopic structural schematic diagram of a plurality of V-shaped levitation electromagnet groups in the present disclosure.
FIG. 18 is a profile structural schematic diagram of a V-shaped levitation electromagnet in the present disclosure.
FIG. 19 is a stereoscopic structural schematic diagram of a V-shaped main core plate in the present disclosure.
FIG. 20 is a stereoscopic structural schematic diagram of a V-shaped side core plate in the present disclosure.
FIG. 21 is a stereoscopic structural schematic diagram of a V-shaped end core block in the present disclosure.
FIG. 22 is a stereoscopic structural schematic diagram of an M-shaped connecting core block in the present disclosure.
FIG. 23 is a cross section structural schematic diagram of a split type V-shaped levitation electromagnet with pole shoes.
FIG. 24 is a structural schematic diagram of an E-shaped bottom steel I-beam and a levitation electromagnet.
FIG. 25 is a structural schematic diagram of an E-shaped bottom I-shaped steel track and a levitation electromagnet.
FIG. 26 is a structural schematic diagram of an E-shaped bottom L-shaped steel track and a levitation electromagnet.
FIG. 27 is a space diagram of FIG. 3.
FIG. 28 is a structural schematic diagram of an ordinary linear levitation electromagnet.
FIG. 29 is a stereo structural schematic diagram of a linear levitation electromagnet with a slope end.
FIG. 30 is a partial space diagram of a snakelike linear motor stator unit.
FIG. 31 is a stereo structural schematic diagram of a snakelike coil.
FIG. 32 is a stereo structural schematic diagram of an E-shaped core with an integrated middle core plate at the end.

Reference signs: 1, roadbed; 2, avoidance space; 3, fastener; 4, track support; 5, I-shaped steel track; 6, armature plate; 7, sliding plate; 8, waist plate; 9, levitation electromagnet; 10, levitation coil; 11, levitation core; 12, gap sensor; 13, linear motor stator; 14, stator connecting plate; 15, stator core; 16, stator coil; 17, stator pole shoe; 18, rotor coil; 19, supporting arm; 20, train; 21, rotor core; 22, traction guide electromagnet; 23, power generating coil; 24, skidding; 25, protective plate; 26, sleeper; 27, L-shaped steel track; 28, wheel; 29, trackhead; 30, E-shaped levitation electromagnet; 31, E-shaped core; 32, side core plate; 33, middle core plate; 34, bottom core plate; 35, rib plate; 36, V-shaped levitation electromagnet; 37, end wire of coil; 38, connecting core plate; 39, end core block; 40, convex pressing block; 41, end bottom plate; 42, wire accommodating groove; 43, bent arc section of levitation coil; 44, straight line section of levitation coil; 45, U-shaped section of levitation coil; 46, cooling water hole; 47, magnetic shoe; and 48, E-shaped armature plate.

### DETAILED DESCRIPTION OF THE EMBODIMENTS

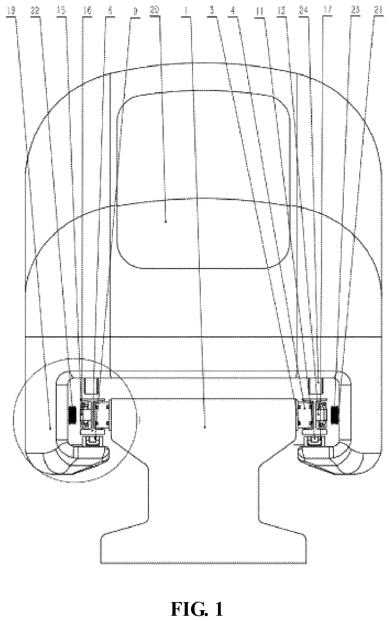

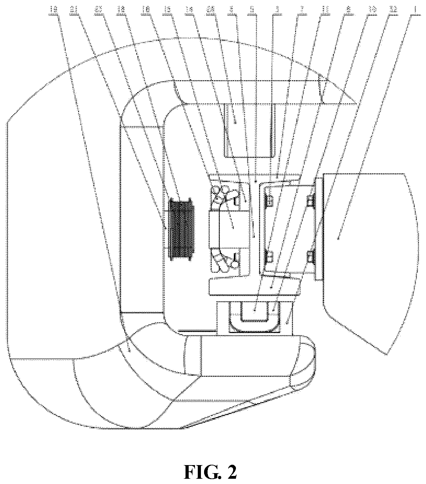

The following describes the present disclosure in detail with reference to the attached figures. As shown in FIG. 1 and FIG. 2, disclosed is an electromagnetic levitation train-track system. Embedded parts are arranged on two sides of the top of a roadbed 1, track supports 4 are fixedly arranged on two sides of the embedded parts through fasteners 3, the extending ends of the track supports 4 are fixedly connected with an I-shaped steel track 5, an armature plate 6 is arranged at the bottom of the I-shaped steel track 5, a sliding plate 7 is arranged at the top of the I-shaped steel track 5, and a vertical waist plate 8 is arranged in the middle of the I-shaped steel track 5. A levitation electromagnet 9 is arranged below the armature plate 6 at a certain distance, the levitation electromagnet 9 is composed of a levitation coil 10 and a levitation core 11, the levitation electromagnet 9 can be an electromagnet capable of achieving the levitation purpose in the prior art, and in a preferred scheme, the levitation coil 10 comprises a rectangular coil and a snakelike coil. The levitation core 11 has a U-shaped or E-shaped cross section, and in the present disclosure, the levitation core 11 is preferably an E-shaped cross section electromagnet (see the relevant description in the second embodiment for the specific structure). A gap sensor 12 is arranged on the levitation electromagnet 9, the levitation electromagnet 9 is arranged below the armature plate 6 at a certain distance, and the levitation electromagnet 9 controls the current magnitude of the levitation coil 10 through the control system according to a gap signal transmitted by the gap sensor, so that a levitation gap of about 10 mm is generally kept between the levitation electromagnet 9 and the armature plate 6, and stable levitation of the train in the vertical direction is kept.

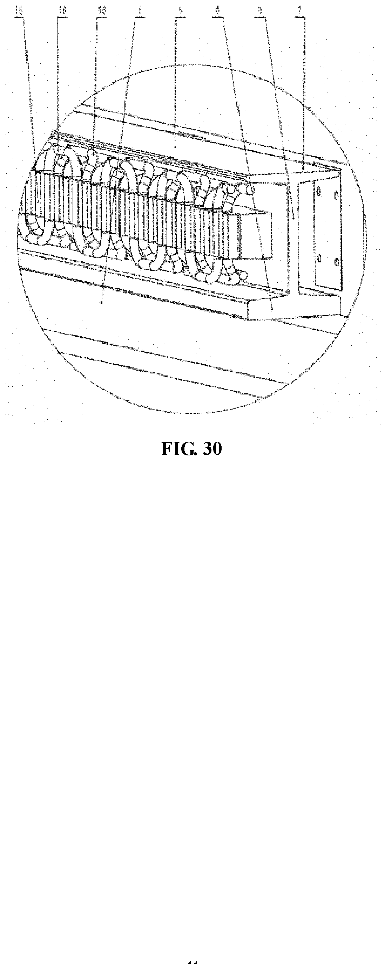

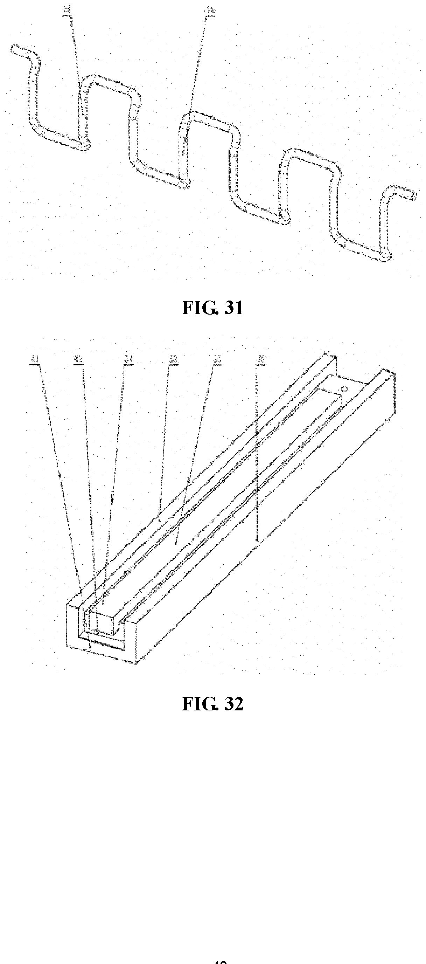

The linear motor stator 13 is arranged on the outer side of the waist plate 8 of the I-shaped steel track 5, the waist plate 8 and the linear motor stator 13 are fixed through a stator connecting plate 14, the linear motor stator 13 is composed of a stator core 15 and a stator coil 16, and the stator cores 15 and the stator coils 16 extend in the advancing direction of the track and are laid in a left row and a right row respectively. As shown in FIG. 30 and FIG. 31, the stator coils 16 are multiple strands of S-shaped or snakelike coils connected end to end, a protective insulation skin is arranged outside the S-shaped or snakelike coils, a plurality of straight line sections are arranged in the middle section and are conveniently embedded into a groove of the stator core 15, two ends of each straight line section are respectively connected through a U shape or an arc, the shape can also be generally a rectangular square wave shape, and corners are connected through arc transition. The U-shaped coils on two sides of the straight line section can be bent towards one side to avoid other groups of coils, and mutual interference between the coils is avoided. One structure of the stator coil 16 is composed of three strands of coils, and the tail ends of the three coils are connected to form a node. The cross section of the stator core 15 is provided with a plurality of stator grooves 25, the stator grooves 25 are arranged at equal intervals, and at least three strands of stator coils 16 are sequentially installed in the stator grooves 25. The control mode of the linear motor can be controlled by a three-phase alternating-current frequency converter, the control mode of the linear motor can also be controlled by a controller of a direct-current brushless motor, and the control mode is easier than that of a traveling wave magnetic field generated by the three-phase alternating-current frequency converter. A traction guide electromagnet 22 is arranged on a supporting arm 19 of the train 20 away from the side face of the linear motor stator 13 by a certain gap, the traction guide electromagnet 22 is composed of a rotor coil 18 and a rotor core 21, the rotor coil 18 of the traction guide electromagnet 22 is a rectangular coil, the rotor core 21 with a rectangular cross section is arranged in the rotor coil 18, and the traction guide electromagnet 22 becomes an electromagnet after being electrified to attract the stator core 15 of the linear motor stator 13. The traction guide electromagnets 22 on the left side and the right side control the difference of current of the rotor coils 18 on the left side and the right side through the control system on the train 20, and the attraction difference between the traction guide electromagnets 22 on the left side and the right side of the train 20 and the stator cores 15 on the left side and the right side of the track is controlled. Therefore, magnetic force gaps on the left side and the right side of the train 20 are controlled to be kept at equal balance positions, and stable levitation of the train in the horizontal direction is kept.

After being electrified, the traction guide electromagnets 22 on two sides of the train 20 form alternating arrangement of NSNS...NSNS magnetic poles, namely, alternating magnets of NSNS...NSNS magnetic poles form the secondary components of the linear motor, the linear motor stators 13 on two sides of the track are the primary components of the linear motor, and the linear motor stators 13 on the track and the traction guide electromagnets 22 on the train form the linear motor. The traction force of the linear motor is controlled through the control system, the control system preferably adopts a control mode of the direct-current brushless motor to control the magnitude and direction of the traction force according to the magnitude of the current of the stator coil 16 of the linear motor stator 13 and the electrifying sequence and direction of the coil, and the train 20 is dragged to run in a levitation mode.

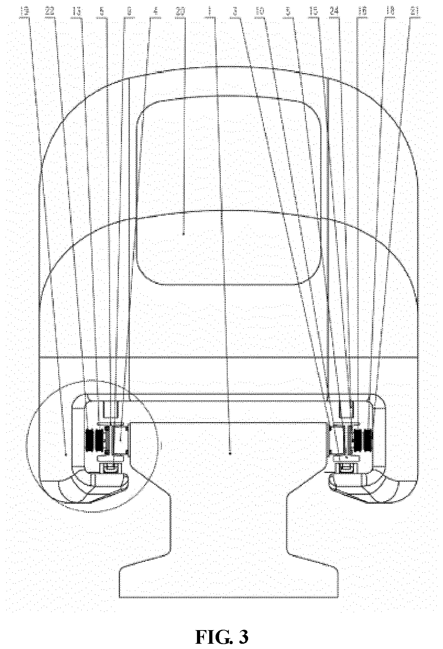

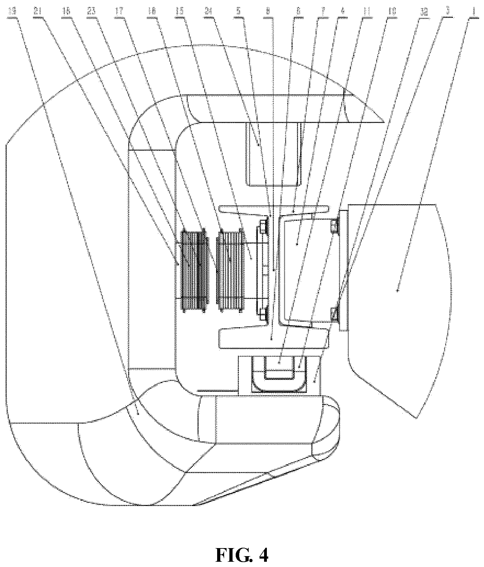

As shown in FIG. 3 and FIG. 4, disclosed is an electromagnetic levitation train-track system. Embedded parts are arranged on two sides of the top of a roadbed 1, track supports 4 are fixedly arranged on two sides of the embedded parts through fasteners 3, the extending ends of the track supports 4 are fixedly connected with an I-shaped steel track 5, an armature plate 6 is arranged at the bottom of the I-shaped steel track 5, a sliding plate 7 is arranged at the top of the I-shaped steel track 5, a vertical waist plate 8 is arranged in the middle of the I-shaped steel track 5, the track supports 4 are supported among the armature plate 6, the sliding plate 7 and the waist plate 8, and the I-shaped steel track 5 is fixed. A levitation electromagnet 9 is arranged below the armature plate 6 at a certain distance, the levitation electromagnet 9 is composed of a levitation coil 10 and a levitation core 11, and the cross section of the levitation core 11 is E-shaped. A gap sensor 10 is arranged on the levitation electromagnet 9, the levitation electromagnet 9 is arranged below the armature plate 6 at a certain distance, and the levitation electromagnet 9 controls the current magnitude of the levitation coil 10 through the control system according to a gap signal transmitted by the gap sensor, so that a levitation gap of about 10 mm is generally kept between the levitation electromagnet 9 and the armature plate 6, and stable levitation of the train in the vertical direction is kept.

The linear motor stator 13 is arranged on the outer side of the waist plate 8 of the I-shaped steel track 5, the waist plate 8 and the linear motor stator 13 are fixed through a stator connecting plate 14, the linear motor stator 13 is composed of a stator core 15 and a stator coil 16, and the stator cores 15 and the stator coils 16 extend in the advancing direction of the track and are laid in a left row and a right row respectively. The stator coil 16 is a single-strand or multi-strand rectangular coil, a stator core 15 with a rectangular cross section is arranged in the stator coil 16, and a stator pole shoe 17 can be separated from the exposed side of the stator core 15. A traction guide electromagnet 22 is arranged on a supporting arm 19 of the train 20 away from the side face of the linear motor stator 13 by a certain gap, the traction guide electromagnet 22 is composed of a rotor coil 18 and a rotor core 21, the rotor coil 18 of the traction guide electromagnet 22 is a rectangular coil, the rotor core 21 with a rectangular cross section is arranged in the rotor coil 18, and the traction guide electromagnet 22 becomes an electromagnet after being electrified to attract the stator core 15 of the linear motor stator 13. The traction guide electromagnets 22 on the left side and the right side control the difference of current of the rotor coils 18 on the left side and the right side through the control system on the train 20, and the attraction difference between the traction guide electromagnets 22 on the left side and the right side of the train 20 and the stator cores 15 on the left side and the right side of the track is controlled. Therefore, magnetic force gaps on the left side and the right side of the train 20 are controlled to be kept at equal balance positions, and stable levitation of the train in the horizontal direction is kept.

After being electrified, the traction guide electromagnets 22 on two sides of the train 20 form alternating arrangement of NSNS...NSNS magnetic poles, namely, alternating magnets of NSNS...NSNS magnetic poles form the secondary components of the linear motor, the linear motor stators 13 on two sides of the track are the primary components of the linear motor, and the linear motor stators 13 on the track and the traction guide electromagnets 22 on the train form the linear motor. Hall sensors are further arranged on the train 20 and the track for detecting the direction of the magnetic field. The traction force of the linear motor is controlled through the control system, the control system preferably adopts a control mode of the direct-current brushless motor to control the magnitude and direction of the traction force according to the magnitude of the current of the stator coil 16 of the linear motor stator 13 and the electrifying sequence and direction of the coil, and the train 20 is dragged to run in a levitation mode.

In the constant-speed coasting stage, the traction guide electromagnets 22 on the left side and the right side of the train form the arrangement of same magnetic poles after being electrified, such as NNNN...NNNN or SSSS...SSSS, the difference of current of rotor coils 18 on the left side and the right side is controlled through the control system on the train 20, and the difference of attraction force for attracting the stator cores 15 on the left side and the right side is controlled. Therefore, gaps on the left side and the right side of the train 20 are controlled to be close to equal balance positions, and the train is kept to stably levitate and slide in the horizontal direction.

A power generating coil 23 is further wound on the rotor coil 18 of the traction guide electromagnet 22 and generates electromagnetic induction with the linear motor stator 13 on the track, the power generating coil 23 induces current to generate power, power is stored in an energy storage device on the train, and the energy storage device comprises a rechargeable battery and a magnetic levitation flywheel energy storage device.

During braking, the traction guide electromagnet 22 on the train controls the linear motor stator 13 through the control system to generate reverse braking force to the traction guide electromagnet 22 and generate power in a regenerative mode, and kinetic energy of the train is stored in the energy storage device on the train side or the track side. After the train 20 is gradually stopped, the skidding 24 at the bottom of the train 20 descends to support the train 20 stably. In the train starting stage, the magnetic levitation flywheel energy storage device transmits the stored electric energy to the linear motor stator 13, and the track side control system controls the current magnitude, electrifying sequence and direction of the stator coil, controls the direction and magnitude of traction force and drags the train to fly in the air.

A protective cover 25 can be further arranged on the outer side of the track, is made of non-magnetic weather-proof materials and protects the linear motor stator 13 from being affected by sand and dust.

Under the medium-low speed condition, the traction guide electromagnet 22 on the train 20 is the linear motor stator 13, and the traction guide electromagnet 22 is composed of a rotor coil 18 and a rotor core 21 on two sides of the original train, namely the traction guide electromagnet 22 is used as the primary component of the linear motor. The linear motor stator 13 on the original track is used as the secondary component of the linear motor. The train 20 supplies power to the traction guide electromagnet 22 through a current-receiving guide track, and the control system on the train 20 controls the traction guide electromagnet 22 to conduct horizontal guiding and meanwhile drags the train to conduct levitation running. At the moment, the linear stator 13 on the track can be provided with a salient pole core instead of a coil, and the linear motor becomes a linear reluctance motor and works according to a reluctance motor control mode.

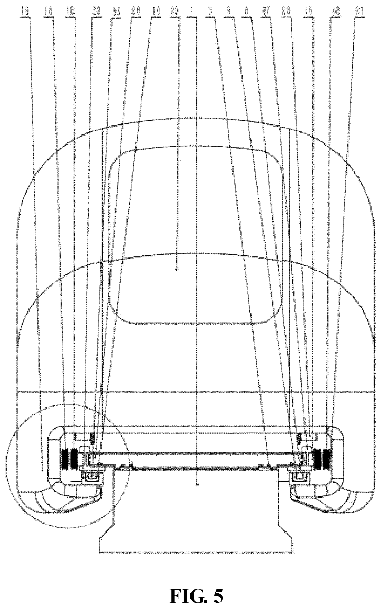

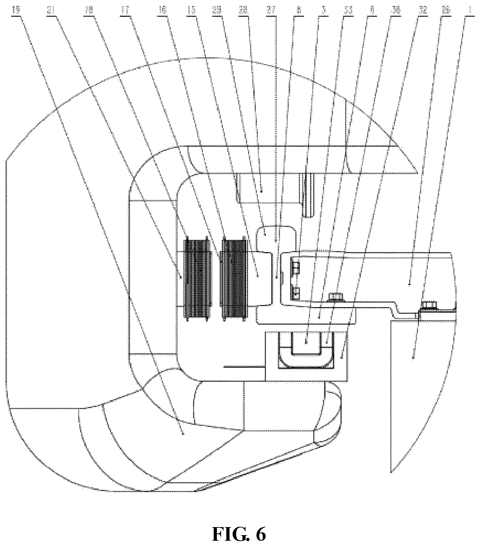

As shown in FIG. 5 and FIG. 6, disclosed is an electromagnetic levitation train-track system. Embedded parts are arranged on two sides of the top of a roadbed 1, sleepers 26 are fixedly arranged above the embedded parts through fasteners 3, the extending ends of the sleepers 26 are fixedly connected with an L-shaped steel track 27, an armature plate 6 is arranged at the bottom of the L-shaped steel track 27, a trackhead 26 is arranged at the top of the L-shaped steel track 27, a vertical waist plate 8 is arranged in the middle of the L-shaped steel track 27, the extending ends of the sleepers 26 are supported among the armature plate 6, the trackhead 26 and the waist plate 8, and the L-shaped steel track 27 is fixed. A levitation electromagnet 9 is arranged below the armature plate 6 at a certain distance, the levitation electromagnet 9 is composed of a levitation coil 10 and a levitation core 11, and the cross section of the levitation core 11 is E-shaped. A middle core plate 33 is arranged in the middle, and side core plates 32 are arranged on the side faces. A gap sensor 12 is arranged on the levitation electromagnet 9, the levitation electromagnet 9 is arranged below the armature plate 6 at a certain distance, and the levitation electromagnet 9 controls the current magnitude of the levitation coil 10 through the control system according to a gap signal transmitted by the gap sensor, so that a levitation gap of about 10 mm is generally kept between the levitation electromagnet 9 and the armature plate 6, and stable levitation of the train in the vertical direction is kept. Wheels 28 are arranged at the bottom of the train 20 and supported at the bottom of the train through wheel axles and bearings, the wheels 28 are levitated above the L-shaped steel track 27 during levitation running, and when the train 20 is decelerated to a certain degree, the wheels 28 make contact with a guide surface supported on the trackhead 29 of the L-shaped steel track 27 to slide until the train stops.

The linear motor stator 13 is arranged on the outer side of the waist plate 8 of the I-shaped steel track 5, the waist plate 8 and the linear motor stator 13 are fixed through a stator connecting plate 14 and can also be directly fixed through a fastener 3, the linear motor stator 13 is composed of a stator core 15 and a stator coil 16, and the stator cores 15 and the stator coils 16 extend in the advancing direction of the track and are laid in a left row and a right row respectively. The stator coil 16 is a multi-strand rectangular coil, a stator core 15 with a rectangular cross section is arranged in the stator coil 16, and a stator pole shoe 17 can be separated from the exposed side of the stator core 15. A traction guide electromagnet 22 is arranged on a supporting arm 19 of the train 20 away from the side face of the linear motor stator 13 by a certain gap, the traction guide electromagnet 22 is composed of a rotor coil 18 and a rotor core 21, the rotor coil 18 of the traction guide electromagnet 22 is a rectangular coil, the rotor core 21 with a rectangular cross section is arranged in the rotor coil 18, and the traction guide electromagnet 22 becomes an electromagnet after being electrified to attract the stator core 15 of the linear motor stator 13. The traction guide electromagnets 22 on the left side and the right side control the difference of current of the rotor coils 18 on the left side and the right side through the control system on the train 20, and the attraction difference between the traction guide electromagnets 22 on the left side and the right side of the train 20 and the stator cores 15 on the left side and the right side of the track is controlled. Therefore, magnetic force gaps on the left side and the right side of the train 20 are controlled to be kept at equal balance positions, and stable levitation of the train in the horizontal direction is kept.

After being electrified, the traction guide electromagnets 22 on two sides of the train 20 form alternating arrangement of NSNS...NSNS magnetic poles, namely, alternating magnets of NSNS...NSNS magnetic poles form the secondary components of the linear motor, the linear motor stators 13 on two sides of the track are the primary components of the linear motor, and the linear motor stators 13 on the track and the traction guide electromagnets 22 on the train form the linear motor. The traction force of the linear motor is controlled through the control system, the control system preferably adopts a control mode of the direct-current brushless motor to control the magnitude and direction of the traction force according to the magnitude of the current of the stator coil 16 of the linear motor stator 13 and the electrifying sequence and direction of the coil, and the train 20 is dragged to run in a levitation mode.

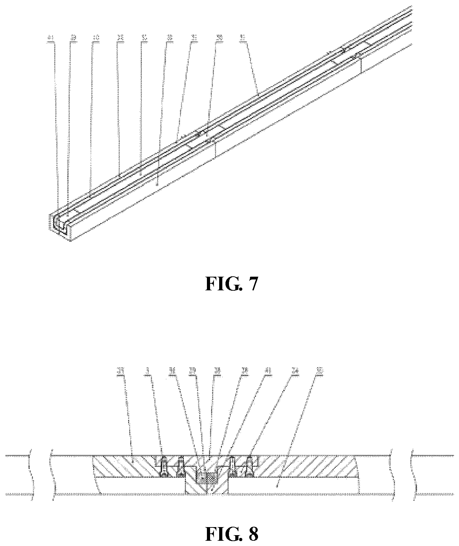

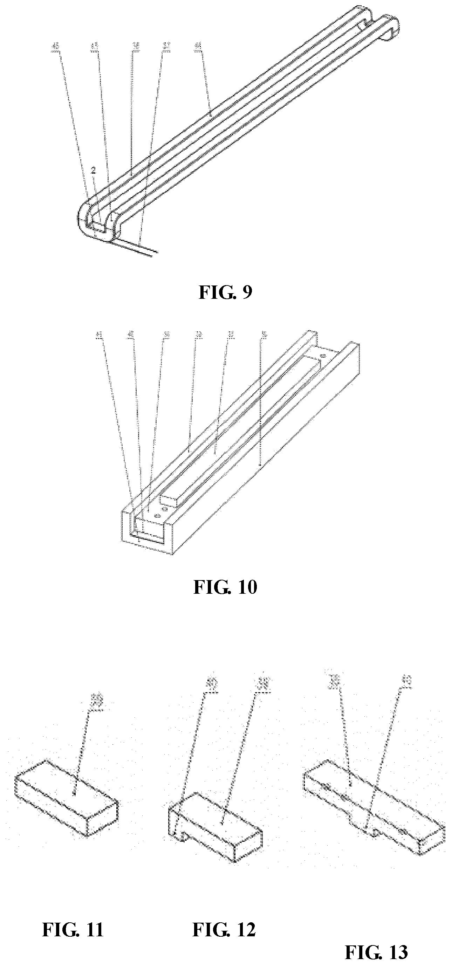

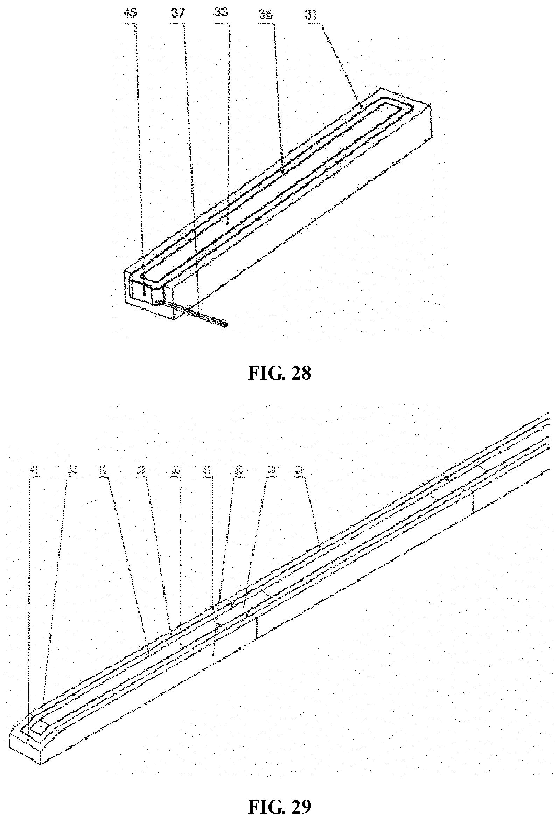

As shown in FIG. 28, the U-shaped electromagnet is an existing usable levitation electromagnet and can be used as the magnetic levitation electromagnet in the scheme. Although a levitation coil of the U-shaped electromagnet keeps a closed coil, the end part of the levitation coil and the middle core plate are basically located on the same horizontal plane. When a plurality of U-shaped electromagnets are spliced, the middle core plates of the U-shaped electromagnets are equivalently cut off by the end parts of the levitation coil. When the two U-shaped electromagnets are spliced, coils of the two U-shaped electromagnets are in contact or external cores are in contact at the splicing position to separate the coils. Under the condition, the magnetic field intensity difference between the joint of the electromagnets and the middle section of the electromagnets is large, and the electromagnetic resistance of the train is large in the running process. In order to overcome the above condition, the embodiment gives a solution (E-shaped electromagnet solution as described in the first embodiment), and the structure of a typical E-shaped electromagnet is as follows. As shown at the left end of FIG. 28, the levitation electromagnet 9 is an E-shaped levitation electromagnet 30, the E-shaped levitation electromagnet 30 comprises an E-shaped core 31 and a levitation coil 36, the cross section of the E-shaped core 31 is E-shaped, side core plates 32 are arranged on two sides of the E-shaped core 31, a middle core plate 33 is arranged in the middle of the E-shaped core 31, a bottom core plate 34 for connecting the side core plates 32 and the middle core plate 33 into an E-shaped cross section is arranged at the bottom of the E-shaped core 31, the E-shaped cross section extends along a straight line or a curve to form the E-shaped core, and the levitation coil 36 is arranged in a groove enclosed among the side core plates 32, the middle core plate 33 and the bottom core plate 35. However, the structure still suffers from the above-mentioned defect of large reluctance, and therefore, the embodiment provides an improved E-shaped electromagnet structure, such as the end part of the electromagnet shown on the left side of FIG. 29. The magnetic field is weakened by using the end part of the electromagnet with the inclined deformed cross section, the gradient generated by the inclination causes the gap between the electromagnet and the armature plate to gradually increase, the magnetic field is weakened, and the magnetic resistance can be reduced. The levitation electromagnet comprises a levitation coil and a magnetic conductive core, and the levitation coil is assembled in a groove of the magnetic conductive core for accommodating the levitation coil, the end part of the magnetic conductive core is smoothly inclined downwards, the middle core plate of the magnetic conductive core is inclined along with the end part of the magnetic conductive core, and a groove used for assembling the end part of the levitation coil on the magnetic conductive core forms an inclined groove along with the inclination of the end part of the magnetic conductive core. However, the electromagnet still belongs to the scheme that the middle core plate is cut off by the end part of the levitation coil, and the magnetic resistance can be reduced to a certain extent. However, the purpose that the middle part and two ends of the electromagnet are all provided with a whole continuous uniform magnetic field cannot be achieved, and in order to solve the problems existing in the scheme, another solution is provided by the embodiment, as shown in FIG. 7 and FIG. 8, the levitation electromagnet is an E-shaped cross section levitation electromagnet. The E-shaped levitation electromagnet 30 comprises an E-shaped core 31 and a levitation coil 36. The cross section of the E-shaped core 31 is E-shaped, side core plates 32 are arranged on two sides of the E-shaped core 31, a middle core plate 33 is arranged in the middle of the E-shaped core 31, a bottom core plate 34 for connecting the side core plates 32 and the middle core plate 33 into an E-shaped cross section is arranged at the bottom of the E-shaped core 31, the cross section extends along a straight line or a curve to form the E-shaped core, the E-shaped electromagnet core is made of a material with high magnetic conductivity, sunken wire accommodating grooves 42 are formed in two ends of the middle core plate 33, the levitation coil 36 is arranged in a groove enclosed among the side core plates 32, the middle core plate 33 and the bottom core plate 34, and coils at two ends of the levitation coil 36 are bent downwards to be embedded into the wire accommodating grooves 42. The end part of the middle core plate protrudes relative to the sunken wire accommodating grooves 42 and is flush with the end face, as shown in FIG. 10. As shown in FIG. 32, detachable end core blocks 39 can be arranged at one end or two ends of the E-shaped core 31 to facilitate installation of two ends of the levitation coil 36, connecting core blocks 38 are installed at the joints of all the levitation electromagnets 30, the end core blocks 39 and the connecting core blocks 38 are connected to the middle core plate 33 through fasteners 3, the middle core plates 33 of all the levitation electromagnets 30 are connected to form a continuous middle core plate 33, and the side core plates 32 on both sides are also connected into two nearly continuous side core plates 32 respectively. After the levitation coil 36 is electrified, the magnetic poles of the middle core plate 33 in the middle are opposite to the magnetic poles of the side core plates 32 on the two sides, that is, when the middle part is an N pole, the magnetic poles of the side core plates 32 on the two sides are S poles, or when the middle part is an S pole, the magnetic poles of the side core plates 32 on the two sides are N poles. After the two ends of the levitation coil 36 are bent downwards, the coil density at the two ends is increased, the magnetic flux converged by the magnetic fields at the two ends is more, and the magnetic field intensity of the end core blocks 39 at the two ends can be enhanced. When the two ends of the levitation coil 36 are bent downwards to a certain length, the magnetic field intensity of the end core blocks 39 at the two ends is equal to or very close to that of the middle core plate 33. In the same way, the magnetic field intensity of the connecting core block 38 at the joint is equal to or very close to that of the middle core plate 33, and a whole continuous uniform magnetic field is formed in the middle and at the two ends. In this way, when the levitation electromagnet 30 slides at the bottom of the armature plate 6 in a levitation mode, each magnetic pole hardly changes, and therefore the reluctance force relative to sliding is low.

The joints of all the levitation electromagnets 30 are hinged and connected through connecting core plates 38, adjacent levitation electromagnets 30 can rotate at a small angle, and although a single levitation electromagnet 30 is linear, the shape of the whole levitation electromagnet 30 after rotation at the joints can be a circular arc to adapt to the circular arc radius of a curved track.

Through the scheme, simply, the embodiment substantially provides another levitation electromagnet comprising a levitation coil and a magnetic conductive core, and the levitation coil is assembled in a groove of the magnetic conductive core for accommodating the levitation coil. Two end parts of the levitation coil are inclined downwards relative to a coil body, and the end parts inclined downwards are arranged in sunken wire accommodating grooves formed in two ends of the magnetic conductive core to form an avoidance space 2 at the end parts of the levitation coil, and the middle core plate 33 of the magnetic conductive core can pass through the end parts of the levitation coil through the avoidance space 2. According to the scheme, the structure that the end parts of the middle core plate are located above the end part of the levitation coil is formed, and the middle core plate can pass through the end part of the levitation coil. Meanwhile, the middle core plate is still located around the levitation coil, the middle core plate is not cut off by the end parts of the levitation coil any more, and therefore the middle core plates of the two levitation electromagnets can be connected. Due to the generation of the avoidance space, the end part of the middle core plate is positioned above the end part of the levitation coil and passes through the end part of the levitation coil, and the middle core plate positioned at the terminal of the levitation electromagnet can be positioned in a magnetic field of the end part of the levitation coil inclined downwards, so that the magnetic field intensity of the middle core plate positioned at the end part is basically consistent with that of the middle core plate positioned at the center of the magnetic conductive core. A whole continuous uniform magnetic field is formed in the middle and at the two ends, so that when the levitation electromagnet slides at the bottom of the armature plate in a levitation mode, each magnetic pole hardly changes, and the reluctance force relative to sliding is very low.

As a preferable scheme, the levitation coil is mainly composed of waist portions located on two sides and a sinking portion connected with the two waist portions, the sinking portion is inclined downwards relative to the waist portions in the horizontal direction, and the sinking portion comprises a connecting section obliquely connected with the waist portions and a sinking section; the magnetic conductive core comprises a bottom core plate 34, side core plates 32 and a middle core plate 33, the side core plates 32 on two sides are located on two transverse sides of the bottom core plate 34 and connected with the side core plates 32 on the two sides through the bottom core plate 34, the middle core plate 33 is paved on the upper surface of the bottom core plate 34, the middle core plate 33 is narrower than the bottom core plate 34 in the transverse direction, two side grooves are formed between the middle core plate 33 and the side core plates 32 to serve as grooves for accommodating the two waist portions of the levitation coil, two longitudinal end parts of the bottom core plate 34 are slotted in a straight step shape or an inclined step shape to form the wire accommodating grooves for accommodating the sinking portion of the levitation coil. According to the scheme, the bottom core plate is divided into an upper layer and a lower layer which are in step shapes, and the bottom core plate is divided into a bottom core plate of the upper step and a bottom core plate of the lower step.

In a preferred scheme, the angle at which the sinking portion is inclined horizontally downwards relative to the waist portions is 15 degrees to 90 degrees, preferably 45 degrees, 60 degrees and 90 degrees. In a more preferred scheme, the angle at which the sinking portion horizontally inclined downwards relative to the waist portions is 90 degrees. The magnetic field formed by the completely vertical sinking portion is closest to the magnetic field of the middle core plate.

However, due to the fact that the levitation coil is provided with the sinking portion, when the levitation coil is assembled in the accommodating groove, if the middle core plate is integrally installed and passes through the upper parts of the wire accommodating grooves, the whole middle core plate is not easy to assemble. Therefore, in a preferred scheme, the middle core plate 33 in the longitudinal direction at one end (as shown in FIG. 32) or two ends (as shown in FIG. 10) is shorter than the length of the bottom core plate 34 of the upper step, the levitation coil is assembled in a groove used for accommodating the levitation coil, then an end core block 39 is assembled on the bottom core plate 34 of the upper step, and the end core block 39 passes through the avoidance space 2 of the levitation coil above the wire accommodating grooves. The end core block is a cut part of the middle core plate or is a shorter middle core plate, and the end core block is assembled into split assembly, so that the assembly is easier.

In a preferred scheme, the levitation coil 36 is formed by bending two ends of a rectangular or rounded rectangular single-strand or multi-strand coil downwards, the levitation coil 36 is formed by winding at least one continuous wire, and at least two end wires 37 extend out of the levitation coil. In a preferred scheme, the middle core plate 33 of the magnetic conductive core passes through the position above the sinking section of the sinking portion of the levitation coil through the avoidance space 2, and the sinking section makes vertical contact with the middle core plate 33 or a gap exists between the sinking section and the middle core plate 33 in the vertical direction.

By means of the levitation electromagnet, the embodiment further provides a levitation electromagnetic system. The levitation electromagnetic system is formed by sequentially connecting a plurality of levitation electromagnets of any scheme, and the adjacent levitation electromagnets are connected through respective middle core plates. The middle core plate in the longitudinal direction is shorter than the length of the bottom core plate of the upper step, the levitation coil is assembled in a groove used for accommodating the levitation coil, then an end core block is assembled on the bottom core plate of the upper step, and the end core block passes through the avoidance space of the levitation coil above the wire accommodating grooves. The levitation electromagnetic system in the embodiment is formed by sequentially connecting the levitation electromagnets, the adjacent levitation electromagnets are provided with the connecting core blocks 38 installed at the joints, the end core blocks 39 and the connecting core blocks 38 are connected to the middle core plate 33 through the fasteners 3, and all the middle core plates and the side core plates on the two sides are connected to be continuous to form the longer levitation electromagnets.

By means of the levitation electromagnet or the levitation electromagnetic system, according to an electromagnetic levitation system of an electromagnetic levitation track, an armature plate is horizontally arranged on the track, the armature plate and a steel structural member form a steel track, a bottom plate of the steel track and the levitation electromagnet according to any one of above claims form the electromagnetic levitation system, and levitation is controlled through the control system. In a preferred scheme, the steel structural member is one of T-shaped steel, I-shaped steel, H-shaped steel, L-shaped steel, C-shaped steel, square steel, flat steel and channel steel. As shown in FIG. 9, the levitation coil 36 is formed by bending two ends of a rectangular single-strand or multi-strand coil downwards, or two parallel straight line sections 44 are arranged in the middle of the levitation coil, U-shaped sections 45 are arranged at the two ends of the straight line section, the U-shaped sections at two ends of the bent arc sections 43 are connected with the straight line section 44 in the middle to form the complete levitation coil 36, the levitation coil 36 is formed by winding a continuous wire into a multi-strand coil, and two end wires 37 extend out of the levitation coil and are connected with the controller.

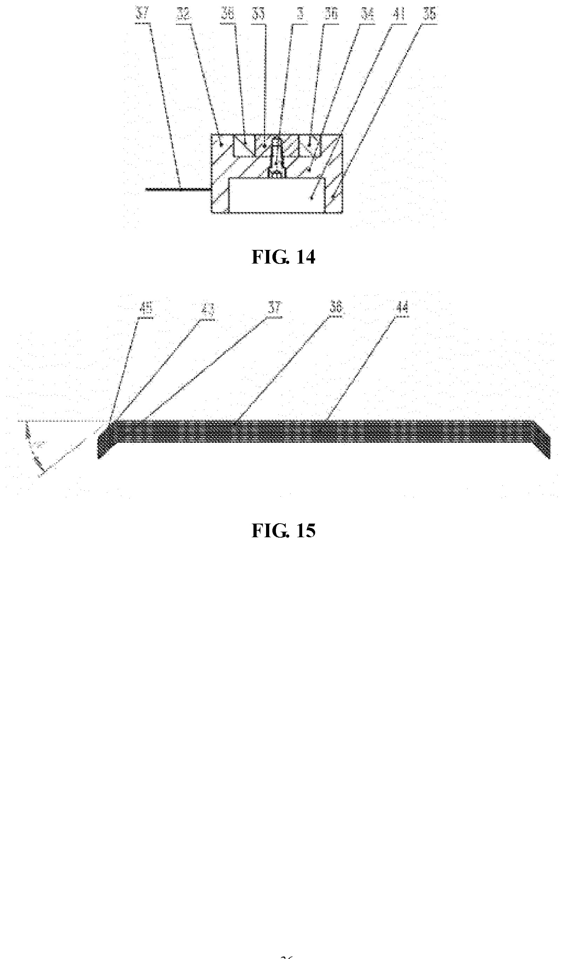

As shown in FIG. 10, the cross section of the E-shaped core 31 is E-shaped, side core plates 32 are arranged on two sides of the E-shaped core 31, a middle core plate 33 is arranged in the middle of the E-shaped core 31, a bottom core plate 34 for connecting the side core plates 32 and the middle core plate 33 into an E-shaped cross section is arranged at the bottom of the E-shaped core 31, the cross section extends along a straight line or a curve to form the E-shaped core, the E-shaped electromagnet core is made of a material with high magnetic conductivity, and sunken wire accommodating grooves 42 are formed in two ends of the middle core plate 33. The U-shaped sections 45 at the two ends of the levitation coil 36 can be accommodated, and in order to facilitate the installation of the levitation coil 36 at the two ends, the two ends of the middle core plate 33 are dug away, and the detachable end core blocks 39 are arranged in a split mode. The end core blocks 39 are installed at the two ends of the E-shaped core 31 through fasteners 3, as shown in FIG. 7 and FIG. 14.

As shown in FIG. 11, the end core block 39 is rectangular, a connecting threaded hole is formed in one side of the end core block 39, and the end core block 39 is made of a material with good magnetic conductivity.

As shown in FIG. 12, the end core block 39 is L-shaped, a connecting threaded hole is formed in one side of the end core block 39, and a convex pressing block 40 is formed at one end of the end core block 39.

As shown in FIG. 13, the joint of the two E-shaped cores 31 can be provided with the connecting core block 38, the connecting core block 38 is rectangular or T-shaped, a connecting threaded hole is formed in one side of the connecting core block 38, the connecting core blocks 38 are installed at the two ends of the E-shaped core 31 through fasteners 3, and the two E-shaped cores 31 are connected together.

As shown in FIG. 15, generally, two parallel straight line sections in the middle of the horizontal levitation coil 36 have both ends bent downwards at an angle A from the horizontal line, preferably between 30 degrees and 90 degrees, as shown in FIG. 9 when the angle is at a right angle of 90 degrees, taking the illustrated angle of 45 degrees as an example, an E-shaped cross section levitation electromagnet is disclosed.

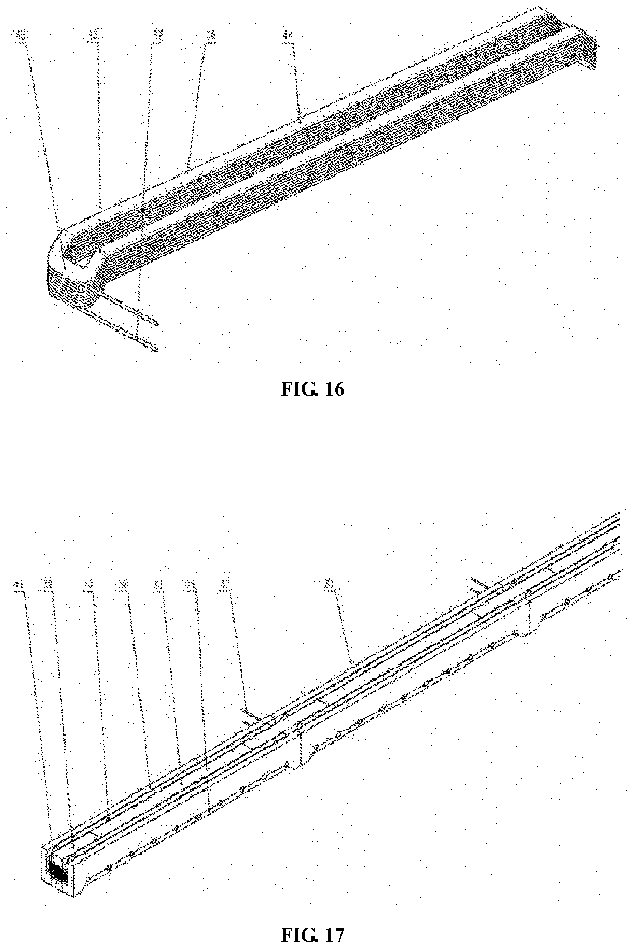

As shown in FIG. 16, the levitation coil 36 is V-shaped on the left and right sides, the V-shaped levitation coil 36 is formed by bending two ends of a rectangular single-strand or multi-strand coil downwards, two parallel straight line sections 44 are arranged in the middle of the levitation coil, U-shaped sections 45 are arranged at the two ends of the straight line section, the U-shaped sections at two ends of the bent arc sections 43 are connected with the straight line section 44 in the middle to form the complete levitation coil 36, the levitation coil 36 is formed by winding a continuous wire into a multi-strand coil, and two end wires 37 extend out of the levitation coil and are connected with the controller.

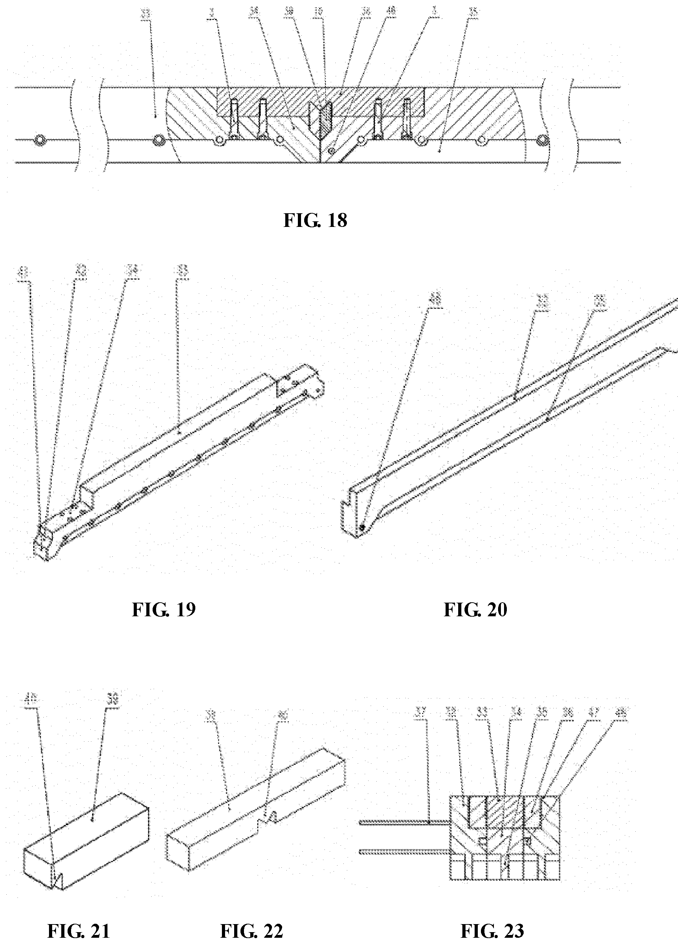

As shown in FIG. 17 and FIG. 18, disclosed is an E-shaped cross section levitation electromagnet. The levitation electromagnet 30 comprises an E-shaped core 31 and a V-shaped levitation coil 36. The cross section of the E-shaped core 31 is E-shaped, side core plates 32 are arranged on two sides of the E-shaped core 31, a middle core plate 33 is arranged in the middle of the E-shaped core 31, a bottom core plate 34 for connecting the side core plates 32 and the middle core plate 33 into an E-shaped cross section is arranged at the bottom of the E-shaped core 31, the cross section extends along a straight line or a curve to form the E-shaped core, the E-shaped electromagnet core is made of a material with high magnetic conductivity, sunken wire accommodating grooves 42 are formed in two ends of the middle core plate 33, the V-shaped levitation coil 36 is arranged in a groove enclosed among the side core plates 32, the middle core plate 33 and the bottom core plate 34, and coils at two ends of the V-shaped levitation coil 36 are bent downwards to be embedded into the wire accommodating grooves 42. Detachable end core blocks 39 can be arranged to facilitate installation of two ends of the levitation coil 36, connecting core blocks 38 are installed at the joints of all the levitation electromagnets 30, the end core blocks 39 and the connecting core blocks 38 are connected to the middle core plate 33 through fasteners 3, the middle core plates 33 of all the levitation electromagnets 30 are connected to form a continuous middle core plate 33, and the side core plates 32 on both sides are also connected into two continuous side core plates 32 respectively. After the V-shaped levitation coil 36 is electrified, the magnetic poles of the middle core plate 33 in the middle are opposite to the magnetic poles of the side core plates 32 on the two sides, that is, when the middle part is an N pole, the magnetic poles of the side core plates 32 on the two sides are S poles, or when the middle part is an S pole, the magnetic poles of the side core plates 32 on the two sides are N poles.

As shown in FIG. 19, FIG. 20 and FIG. 23, in order to conveniently cool the E-shaped core 31, the E-shaped core 31 is sectioned into three parts, namely side core plates 32 on two sides and a middle core plate 33 in the middle, a cooling water channel 46 is formed in a groove at the joint, and then the three parts are connected into a whole through fasteners 3. As shown in FIG. 19, FIG. 20 and FIG. 23, in order to facilitate the installation of the levitation coil 36 at the two ends, the two ends of the middle core plate 33 are dug away, and the detachable end core blocks 39 are arranged in a split mode. The end core blocks 39 are installed at the two ends of the E-shaped core 31 through fasteners 3, as shown in FIG. 23. Rib plates 35 are arranged at the bottoms of the middle core plate 33 and the side core plates 32, so that the strength of the levitation electromagnet 30 is improved.

As shown in FIG. 21, the end core block 39 is L-shaped or V-shaped, a V-shaped convex pressing block 40 is arranged at one end of the end core block 39, the bottom surface of the end core block 39 is matched with the top surfaces of the two ends of the levitation coil 36, and the end core block 39 is made of a material with good magnetic conductivity.

As shown in FIG. 22, the joint of the two E-shaped cores 31 can be provided with the connecting core block 38, the connecting core block 38 is long-strip-shaped, an M-shaped groove is formed in the middle of the connecting core block 38, a V-shaped convex pressing block 40 is arranged in the middle, the connecting core blocks 38 are installed at the two ends of the E-shaped core 31 through fasteners 3, and the two E-shaped cores 31 are connected together, as shown in FIG. 18.

As shown in FIG. 23, laterally protruding magnetic shoes 47 are arranged on the side faces of the side core plates 32 and the middle core plate 33 to prevent the levitation coil 36 from taking off.

Reinforcing plates can also be arranged on the side faces of the levitation electromagnet.

The structure principle of the levitation coil is described by taking the levitation coils in two shapes as examples, the specific shape is deformed and designed into other similar shapes according to the principle, the principle is the same, and the levitation coil is not repeated in figures.

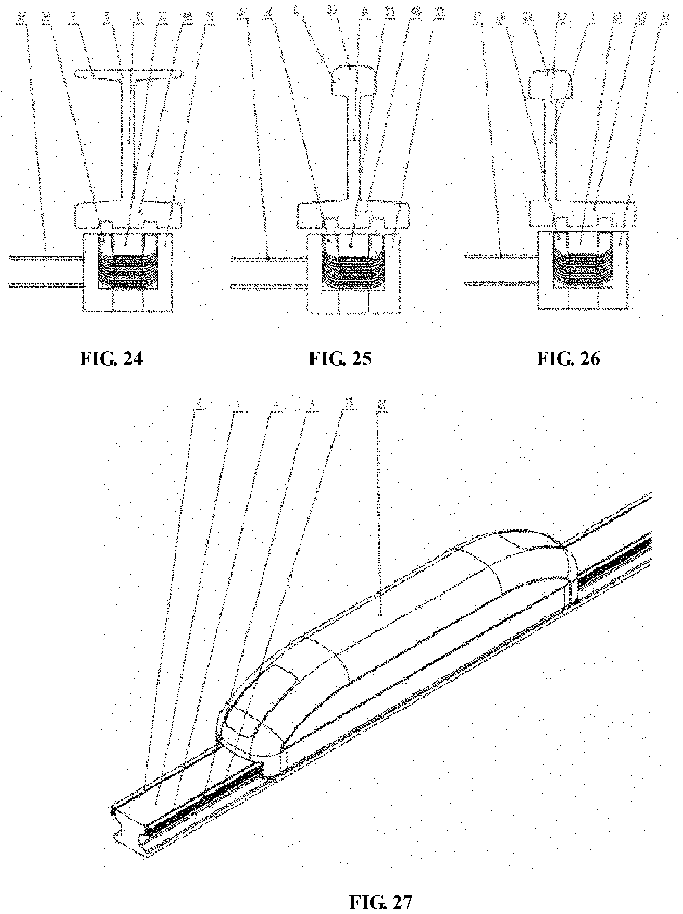

As shown in FIG. 24, the E-shaped bottom I-shaped steel track is arranged on the upper portion, the cross section of the steel track 5 is generally in an I shape, three bottom studs or flanges extending downwards are arranged below the armature plate at the bottom of the I-shaped steel track, or two grooves are formed, the bottom of the E-shaped armature plate 48 is an E-shaped armature plate 48 with a downward opening, and the E-shaped bottom I-shaped steel track and the T-shaped steel on the upper portion form the E-shaped bottom I-shaped steel track. A levitation electromagnet 30 is arranged below the E-shaped armature plate 48 at the bottom at a certain distance, so that the levitation electromagnet 30 can have certain horizontal guide force while keeping levitation, and the lengths and widths of three bottom studs or flanges can be set as required and correspond to the positions of the side core plates 32 and the middle core plate 33 of the E-shaped cross section levitation electromagnet.

The E-shaped bottom armature plate 48 can be combined with the L-shaped steel track to form an E-shaped bottom L-shaped steel track, and the E-shaped bottom L-shaped steel track has the same function as the E-shaped bottom I-shaped steel track 48. The levitation steel track is suitable for medium-low speed magnetic levitation trains.

The E-shaped armature plate 48 can be combined with steel structural parts, and the steel structural parts comprise T-shaped steel, I-shaped steel, H-shaped steel, L-shaped steel, C-shaped steel, square steel, flat steel and channel steel which are connected together through welding or fasteners and have the same function as the E-shaped bottom I-shaped steel track 48.

The levitation electromagnets not only can be used as levitation electromagnets, but also can be used as horizontal guide electromagnets and can be arranged on the left side and the right side of the train, and the levitation electromagnets and the magnetic conductive plates vertically arranged on the two sides of the track beam form the horizontal guide electromagnets to control levitation of the left side and the right side of the train.

The permanent magnet linear motor is replaced by a linear motor in other forms to become a magnetic levitation track and an electromagnetic levitation train-track system in other driving forms, and the protection range of the present disclosure is still included.

The above mentioned are only preferred specific embodiments of the present disclosure. However, the scope of protection of the present disclosure is not limited to the embodiments described herein. Any technicians skilled in the technical field are within the technical scope disclosed by the present disclosure; and any replacements or modifications according to the technical schemes of the present disclosure and ideas thereof all shall be included in the scope of protection of the present disclosure.

## Claims

1. An electromagnetic levitation train-track system, tracks being arranged on two sides of a roadbed or track beams, and a magnetic levitation train running on the tracks, wherein traction guide electromagnets (22) are horizontally arranged on supporting arms (19) on two sides of the magnetic levitation train (20), the traction guide electromagnet (22) is horizontally arranged in the magnetic pole direction, a linear motor stator (13) is horizontally arranged at the position, corresponding to the traction guide electromagnet (22), on the track, the linear motor stator (13) is composed of a stator coil (16) and a stator core (15), the stator core (15) is horizontally arranged in the magnetic pole direction, the working face of the traction guide electromagnet (22) and the working face of the stator core (15) are horizontally arranged and form a core linear motor at a certain magnetic gap, a levitation electromagnet (9) is arranged at the bottom of the magnetic levitation train, and an armature plate (6) is horizontally arranged above the levitation electromagnet (9) at the bottom of the track at a certain magnetic gap.

2. The electromagnetic levitation train-track system according to claim 1, wherein a rotor coil (18) of the traction guide electromagnet (22) is connected with a control system, the current magnitudes and directions of the coils of the linear motor stator (13) and the traction guide electromagnet (22) are controlled through the control system, and the horizontal guide force and the traction force are controlled; and a levitation coil (10) in the levitation electromagnet (9) is connected with the control system to form an electromagnetic levitation system, the current magnitude of the levitation coil (10) of the levitation electromagnet (9) is controlled through the control system, and the levitation force is controlled.

3. The electromagnetic levitation train-track system according to claim 1, wherein the levitation electromagnet (9) is an E-shaped levitation electromagnet (30), the E-shaped levitation electromagnet (30) comprises an E-shaped core (31) and a levitation coil (36), the cross section of the E-shaped core (31) is E-shaped, side core plates (32) are arranged on two sides of the E-shaped core (31), a middle core plate (33) is arranged in the middle of the E-shaped core (31), a bottom core plate (34) for connecting the side core plates (32) and the middle core plate (33) into an E-shaped cross section is arranged at the bottom of the E-shaped core (31), the E-shaped cross section extends along a straight line or a curve to form the E-shaped core, and the levitation coil (36) is arranged in a groove enclosed among the side core plates (32), the middle core plate (33) and the bottom core plate (35).

4. The electromagnetic levitation train-track system according to claim 1, wherein the levitation electromagnet (9) is an E-shaped levitation electromagnet (30), the E-shaped levitation electromagnet (30) comprises an E-shaped core (31) and a levitation coil (36), the cross section of the E-shaped core (31) is E-shaped, side core plates (32) are arranged on two sides of the E-shaped core (31), a middle core plate (33) is arranged in the middle of the E-shaped core (31), a bottom core plate (34) for connecting the side core plates (32) and the middle core plate (33) into an E-shaped cross section is arranged at the bottom of the E-shaped core (31), the E-shaped cross section extends along a straight line or a curve to form the E-shaped core, sunken wire accommodating grooves (42) are formed in two ends of the middle core plate (33), the levitation coil (36) is arranged in a groove enclosed among the side core plates (32), the middle core plate (33) and the bottom core plate (35), and coils at two ends of the levitation coil (36) are bent downwards to be embedded into the wire accommodating grooves (42).

5. The electromagnetic levitation train-track system according to claim 1, wherein the armature plate (6) horizontally arranged on the track and T-shaped steel located on the armature plate form an I-shaped steel track (5), a bottom plate of the I-shaped steel track (5) and the E-shaped levitation electromagnet (30) form an electromagnetic levitation system, and levitation is controlled through the control system.

6. The electromagnetic levitation train-track system according to claim 1, wherein the armature plate (6) horizontally arranged on the track and I-shaped steel form an L-shaped steel track (27), a bottom plate of the L-shaped steel track (27) and the E-shaped levitation electromagnet (30) form an electromagnetic levitation system, and levitation is controlled through the control system.

7. The electromagnetic levitation train-track system according to claim 1, wherein the linear motor stator (13) is the primary component of a linear motor composed of a plurality of S-shaped bent snakelike or rounded square wave rectangular stator coils (16) and a stator core (15).

8. The electromagnetic levitation train-track system according to claim 1, wherein the linear motor stator (13) is the primary component of a linear motor composed of a plurality of rectangular stator coils (16) and a stator core (15).

9. The electromagnetic levitation train-track system according to claim 1, wherein the traction guide electromagnets (22) are arranged on two sides of the track to serve as the primary components of a linear motor, and the linear motor stators (13) composed of a stator coil (16) and a stator core (15) are arranged on supporting arms (19) on two sides of the magnetic levitation train to serve as the secondary components of the linear motor.

10. The electromagnetic levitation train-track system according to claim 1, wherein the traction guide electromagnets (22) are arranged on two sides of the magnetic levitation train to serve as the primary components of a linear motor, and the magnetic conductive cores or core coils composed of magnetic conductive cores and electromagnetic coils are arranged on two sides of the track to serve as the secondary components of the linear motor.

11. The electromagnetic levitation train-track system according to claim 4, wherein the levitation coil (36) is formed by bending two ends of a rectangular single-strand or multi-strand coil downwards, namely, two parallel straight line sections (44) are arranged in the middle of the levitation coil (36), downward bent arc sections (43) at two ends of the straight line sections (44) are connected with U-shaped sections (45) at two ends to form the complete levitation coil (36), the levitation coil (36) is formed by winding at least one continuous wire, and at least two end wires (37) extend out of the levitation coil (36).

12. The electromagnetic levitation train-track system according to claim 4, wherein the whole middle core plate (33) or two ends of the middle core plate (33) is/are split into detachable long-strip-shaped, L-shaped, T-shaped or M-shaped connecting core blocks (38).

13. The E-shaped levitation electromagnet according to claim 4, 9, or 10, wherein the E-shaped armature plate (48) is combined with a steel structural member, and the steel structural member is at least one of T-shaped steel, I-shaped steel, H-shaped steel, L-shaped steel, C-shaped steel, square steel, flat steel and channel steel to form an E-shaped bottom levitation steel track.

14. A levitation electromagnet, comprising a levitation coil and a magnetic conductive core, and the levitation coil being assembled in a groove of the magnetic conductive core for accommodating the levitation coil, wherein two end parts of the levitation coil are inclined downwards relative to a coil body, and the end parts inclined downwards are arranged in sunken wire accommodating grooves formed in two ends of the magnetic conductive core to form an avoidance space (2) at the end parts of the levitation coil, and the middle core plate (33) of the magnetic conductive core can pass through the end parts of the levitation coil through the avoidance space (2).

15. The levitation electromagnet according to claim 14, wherein the levitation coil is mainly composed of waist portions located on two sides and a sinking portion connected with the two waist portions, the sinking portion is inclined downwards relative to the waist portions in the horizontal direction, and the sinking portion comprises a connecting section obliquely connected with the waist portions and a sinking section; the magnetic conductive core comprises a bottom core plate (34), side core plates (32) and a middle core plate (33), the side core plates (32) on two sides are located on two transverse sides of the bottom core plate (34) and connected through the bottom core plate (34), the middle core plate (33) is paved on the upper surface of the bottom core plate (34), the middle core plate (33) is narrower than the bottom core plate (34) in the transverse direction, two side grooves are formed between the middle core plate (33) and the side core plates (32) to serve as grooves for accommodating the two waist portions of the levitation coil, two longitudinal end parts of the bottom core plate (34) are slotted in a straight step shape or an inclined step shape to form the wire accommodating grooves for accommodating the sinking portion of the levitation coil.

16. The levitation electromagnet according to claim 15, wherein the angle at which the sinking portion horizontally inclined downwards relative to the waist portions is 15-90 degrees.

17. The levitation electromagnet according to claim 16, wherein the angle at which the sinking portion horizontally inclined downwards relative to the waist portions is 90 degrees.

18. The levitation electromagnet according to claim 15, wherein the middle core plate (33) in the longitudinal direction at one end or two ends is shorter than the length of the bottom core plate (34) of the upper step, the levitation coil is assembled in a groove used for accommodating the levitation coil, then an end core block (39) is assembled on the bottom core plate (34) of the upper step, and the end core block (39) passes through the avoidance space (2) of the levitation coil above the wire accommodating grooves.

19. The levitation electromagnet according to claim 14 or 15, wherein the levitation coil is formed by bending two ends of a rectangular or rounded rectangular single-strand or multi-strand coil downwards, the levitation coil is formed by winding at least one continuous wire, and at least two end wires extend out of the levitation coil.

20. The levitation electromagnet according to claim 14 or 15, wherein the middle core plate (33) of the magnetic conductive core passes through the position above the sinking section of the sinking portion of the levitation coil through the avoidance space (2), and the sinking section makes vertical contact with the middle core plate (33) or a gap exists between the sinking section and the middle core plate (33) in the vertical direction.

21. A levitation electromagnet, comprising a levitation coil and a magnetic conductive core, and the levitation coil being assembled in a groove of the magnetic conductive core for accommodating the levitation coil, wherein the end part of the magnetic conductive core is smoothly inclined downwards, the middle core plate (33) of the magnetic conductive core is inclined along with the end part of the magnetic conductive core, and a groove used for assembling the end part of the levitation coil on the magnetic conductive core forms an inclined groove along with the inclination of the end part of the magnetic conductive core.

22. A levitation electromagnet system, wherein the levitation electromagnet system is formed by sequentially connecting a plurality of levitation electromagnets according to any one of claims 14 to 20, and the middle core plates (33) and the side core plates (32) of every two adjacent levitation electromagnets are connected through connecting plates by the adjacent levitation electromagnets.

23. A levitation electromagnet system, wherein the levitation electromagnet system is formed by sequentially connecting a plurality of levitation electromagnets according to claim 18, and the middle core plates (33) of two levitation electromagnets are connected through connecting core blocks (38) by the adjacent levitation electromagnets.

24. A magnetic levitation track, wherein a linear motor stator (13) is horizontally installed on the track, the linear motor stator (13) is composed of a stator coil (16) and a stator core (15), the stator core (15) is horizontally arranged in the magnetic pole direction, the stator core (15) is provided with a vertical groove for installing the stator coil (16), the magnetic pole working face of the stator core (15) is vertically arranged, and armature plates (6) are horizontally arranged on two sides of the track.

25. The magnetic levitation track according to claim 24, wherein the stator coils (16) are a plurality of S-shaped bent snakelike coils or rounded square wave rectangular coils or rectangular coils.

26. The magnetic levitation track according to claim 24, wherein the linear motor stator (13) is composed of a plurality of rectangular stator coils and a stator core, the rectangular stator coils and the stator cores are paved in parallel along two sides of the track, and the rectangular stator coils are arranged outside the rectangular stator core.

27. An electromagnetic levitation system of an electromagnetic levitation track, wherein an armature plate is horizontally arranged on the track, the armature plate and a steel structural member form a steel track, a bottom plate of the steel track and the levitation electromagnet according to any one of claims 14 to 20 form the electromagnetic levitation system, and levitation is controlled through a control system.

28. The electromagnetic levitation system of an electromagnetic levitation track according to claim 27, wherein the steel structural member is at least one of T-shaped steel, I-shaped steel, H-shaped steel, L-shaped steel, C-shaped steel, square steel, flat steel and channel steel.
